# EUROPEAN PATENT SPECIFICATION

(11) **EP 2 387 881 B1**
(45) Date of publication and mention of the grant of the patent: **29.07.2015**
(21) Application number: 11159490.9
(22) Date of filing: 24.03.2011
(51) Int. Cl.: A01K 89/01

(54) **Spinning reel spool**
Angelrollenspule
Bobine de moulinet de pêche

(30) Priority: 18.05.2010 JP 2010114385
(43) Date of publication of application: 23.11.2011
(73) Proprietor: Shimano Components (Malaysia) SDN BHD, 81500 Pontian (Johor) (MY)
(72) Inventor: Chiew, Chen Wee, 81500, Pontian, Johor (MY); Chew, Chun Wee, 81500, Pontian, Johor (MY)
(74) Representative: Sonnenberg, Fred

(56) References cited:
- JP-A- 2001 148 973
- JP-A- 2008 005 719
- JP-U- 49 070 088
- JP-U- 62 021 864

## Description

### BACKGROUND OF THE INVENTION

### Field of the Invention

The present invention relates to a spool, particularly to a spinning reel spool attached movably back and forth to a reel unit for winding a fishing line around the outer periphery thereof.

### Background Art

Specification of Japan Patent No. 3958737 describes one of the well-known spinning reel spools formed by means of injection molding of synthetic resin. The well-known spinning reel spools include a bobbin trunk, a front flange and two reinforcement ribs. The bobbin trunk is used for winding a fishing line around the outer periphery thereof. The front flange, having a large diameter, is formed on the front end of the bobbin trunk. On the other hand, the reinforcement ribs, each having a large diameter, are formed on the base end of the bobbin trunk. The front flange and the reinforcement ribs are integrally formed with the bobbin trunk. The reinforcement ribs are separated at a predetermined interval along the axial direction of a spool shaft.

In the well-known spinning reel spools with the aforementioned structure, the front flange and the reinforcement ribs are formed as thick annular portions. The shrinkage amount of a component, during the cooling step of the injection molding of synthetic resin, is generally proportional to the thickness thereof. Therefore, the annular thick portions shrink considerably in the cooling step. A sink mark is accordingly produced on the outer surfaces thereof. This deteriorates the appearance of the spools. Document JP 49 070088U discloses a spinning reel spool according to the preamble of claim 1.

In view of the above, the present invention addresses a need to produce a spinning reel spool made of synthetic resin that limits the production of sink marks on the outer surface thereof.

### SUMMARY OF THE INVENTION

A spinning reel spool according to claim 1 is attached onto a spool shaft mounted movably back and forth in a reel unit for winding a fishing line thereon. The spool includes a front flange, a rear flange and a bobbin trunk. The rear flange is disposed rearwards of the front flange. The bobbin trunk is integrally formed with the front and rear flanges. The bobbin trunk has a diameter less than diameters of the front and rear flanges. The bobbin trunk includes a plurality of coupling portions for coupling the front flange and the rear flange. The coupling portions are disposed at predetermined intervals in a circumferential direction of the bobbin trunk.

According to the spinning reel spool of the present invention, the plural coupling portions couple the front flange and the rear flange. With the plural coupling portions, the thickness of the bobbin trunk can be regulated to vary less with respect to the thicknesses of the front flange and rear flanges. It is herein possible to regulate variation in thickness of the bobbin trunk with respect to the thicknesses of the front flange and rear flanges through the bobbin trunk formed with the plural coupling portions circumferentially disposed at predetermined intervals. Therefore, production of sink marks on the outer surface of the spool is limited.

In the spinning reel spool, the bobbin trunk further includes a tubular coupling portion that connects the inner peripheries of the coupling portions between the front flange and the rear flange. The tubular coupling portion has an inner diameter increasing from its front end, the inner peripheral surface of the tubular coupling portion being tapered at an angle of roughly 0,5 to 2 degrees with respect to the spool shaft. According to the spinning reel spool of the present invention, the inner peripheries of the coupling portions are connected by the tubular coupling portion. Therefore, circumferential stiffness can be enhanced for the bobbin trunk.

. In the spinning reel spool, the coupling portions are preferably each disposed along a back-and-forth direction. According to the spinning reel spool of this aspect of the present invention, the coupling portions are simply structured. Therefore, the spool including the coupling portions can be easily manufactured by injection molding.

Preferably, in the spinning reel spool, the coupling portions are obliquely disposed to intersect with a back-and-forth direction. According to the spinning reel spool of this aspect of the present invention, the coupling portions are obliquely disposed. Therefore, circumferential stiffness can be further enhanced for the bobbin trunk.

Advantageously, in the spinning reel spool, the coupling portions may include a plurality of first coupling portions and a plurality of second coupling portions. The first coupling portions are obliquely disposed along a first direction intersecting with the back-and-forth direction, whereas the second coupling portions are obliquely disposed along a second direction intersecting with the first direction. According to the spinning reel spool of this aspect of the present invention, the coupling portions are formed with the first coupling portions and the second coupling portions, while the first coupling portions and the second coupling portions obliquely intersect along the first direction and the second direction. Plural intersections are thereby formed between the first coupling portions and the second coupling portions along the circumferential direction and the back-and-forth direction. Therefore, circumferential stiffness can be further enhanced for the bobbin trunk.

Preferably, in the spinning reel spool, the bobbin trunk further includes at least an annular portion disposed perpendicular to the spool shaft for connecting the coupling portions in the circumferential direction of the bobbin trunk. According to the spinning reel spool of this aspect of the present invention, the coupling portions, circumferentially disposed at predetermined intervals, are circumferentially connected by the annular portion. Therefore, circumferential stiffness can be further enhanced for the bobbin trunk.

Preferably, the spinning reel spool further includes a tubular skirt integrally formed with the outer periphery of the rear flange. According to the spinning reel spool of this aspect of the present invention, stiffness can be enhanced for the entire spool using the tubular skirt.

Overall, according to the present invention, it is possible to regulate variation in thickness of the bobbin trunk with respect to the thicknesses of the front and rear flanges based on the bobbin trunk formed with plural coupling portions circumferentially disposed at predetermined intervals. Therefore, production of sink marks on the outer surface of the spool can be limited.

### BRIEF DESCRIPTION OF THE DRAWINGS

Referring now to the attached drawings which form a part of this original disclosure:
FIG. 1 is a perspective view of a spinning reel adopting an exemplary embodiment of the present invention;
FIG. 2 is a cross-sectional side view of the spinning reel;
FIG. 3 is a cross-sectional rear view of the spinning reel;
FIG. 4 is an exploded perspective view of a spool;
FIG. 5 is a cross-sectional view of the spinning reel, sectioned along a line V-V in FIG. 2;
FIG. 6 is a perspective view of a spool of a second exemplary embodiment of the present invention;
FIG. 7 is a perspective view of a spool of a third exemplary embodiment of the present invention;
FIG. 8 is a perspective view of a spool of a fourth exemplary embodiment of the present invention;
FIG. 9 is a perspective view of a spool of a fifth exemplary embodiment which is not part of the present claimed invention;
FIG. 10 is a perspective view of a spool of a sixth exemplary embodiment not part of of the present claimed invention;
FIG. 11 is a perspective view of a spool of a seventh exemplary embodiment not part of the present claimed invention; and
FIG. 12 is a perspective view of a spool of an eighth exemplary embodiment not part of the present claimed invention.

### DETAILED DESCRIPTION OF THE EMBODIMENTS

### First Exemplary Embodiment

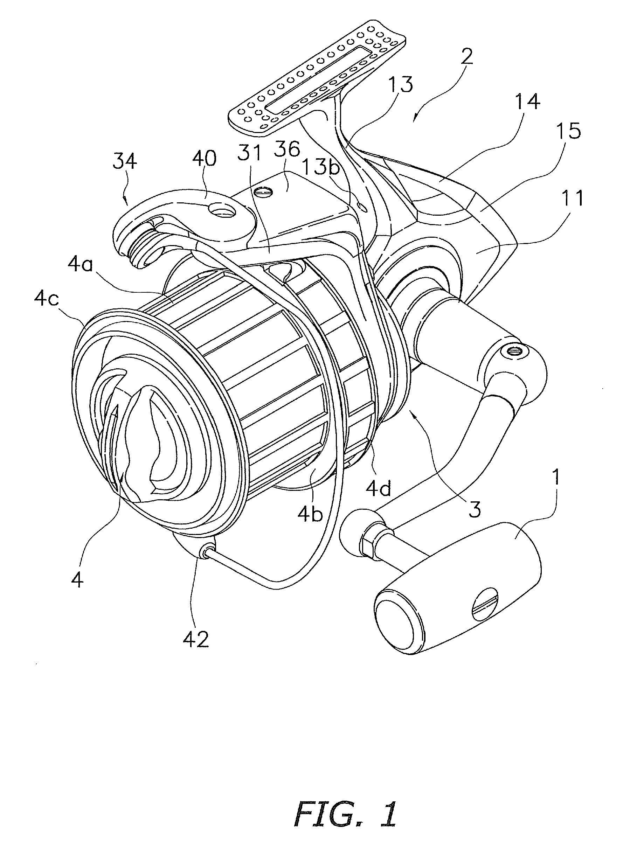

As illustrated in FIGS. 1, 2 and 3, a spinning reel employing a first exemplary embodiment of the present invention is a spinning reel for surf casting and mainly includes a handle 1, a reel unit 2, a rotor 3 and a spool 4. The reel unit 2 is attached to a fishing rod. The rotor 3 is rotatably attached to the front portion of the reel unit 2. The spool 4 is disposed at the front of the rotor 3 and is configured to move back and forth. Further, the spinning reel includes a rotor drive mechanism 5 and an oscillation mechanism 6. The rotor drive mechanism 5 is configured to drive and rotate the rotor 3 in conjunction with rotation of the handle 1. The oscillation mechanism 6 is configured to move the spool 4 back and forth in conjunction with rotation of the rotor 3.

The reel unit 2 contains the rotor drive mechanism 5 and the oscillation mechanism 6 in the interior thereof. The reel unit 2 includes a chassis 10, a first lid member 11, a second lid member 12, a fishing rod attachment leg 13, a first cover member 14 and a second cover member 15. The chassis 10 is laterally open at both sides. The first and second lid members 11 and 12 cover the open lateral sides of the chassis 10, respectively. The fishing rod attachment leg 13 is integrally formed with the chassis 10. The first and second cover members 14 and 15 cover the chassis 10, the first lid member 11 and the second lid member from behind.

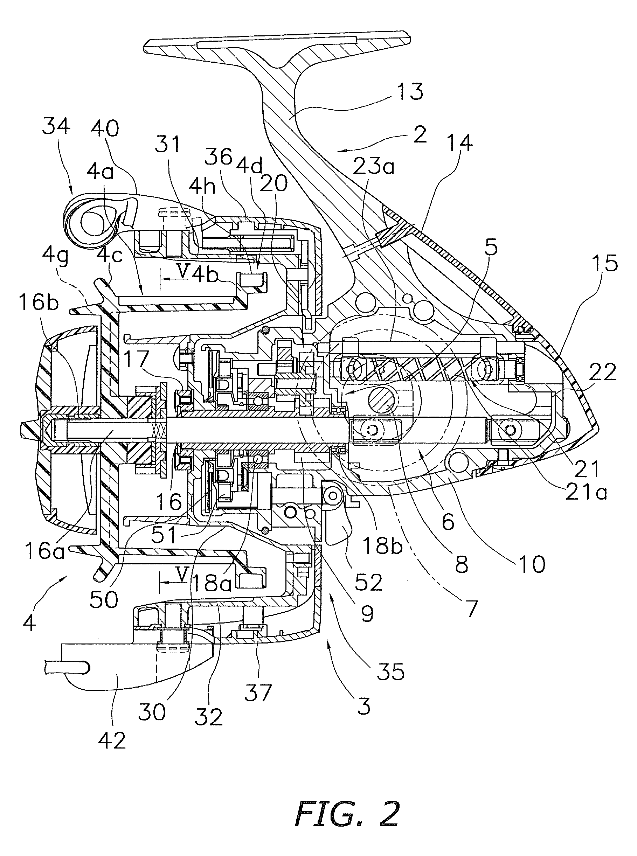

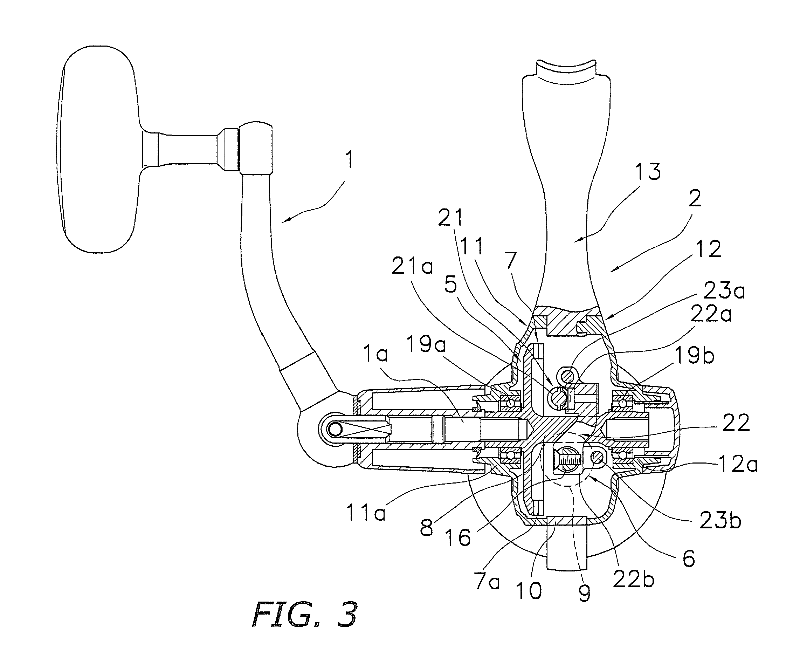

As illustrated in FIGS. 2 and 3, the rotor drive mechanism 5 includes a master gear shaft 8, a master gear 7 and a pinion gear 9. A handle shaft 1a of the handle 1 is screwed and fixed into the master gear shaft 8. The master gear 7 is integrally formed with the master gear shaft 8. The pinion gear 9 is meshed with the master gear 7.

As illustrated in FIG. 3, the master gear shaft 8 is a solid core member made of aluminum alloy. The master gear shaft 8 is integrally molded with the master gear 7. The master gear shaft 8 is rotatably attached to the reel unit 2 through a bearing 19a and a bearing 19b. The bearing 19a is attached to a first boss 11a formed on the first lid member 11 of the reel unit 2, whereas the bearing 19b is attached to a second boss 11b formed on the second lid member 12 of the reel unit 2.

The master gear 7 is a face gear made of, for instance, aluminum alloy. The master gear 7 is integrally molded with the master gear shaft 8. As illustrated in FIG. 3, the master gear 7 is disposed such that a gear portion 7a thereof faces to the right. The gear portion 7a is formed with helical gear teeth meshing with the pinion gear 9.

As illustrated in FIG. 2, the pinion gear 9 is a hollow tubular member. The front portion of the pinion gear 9 penetrates the rotor 3. The rotor 3 is thus attached onto the pinion gear 9 in a non-rotatable state. A spool shaft 16 is disposed in the inner periphery of the pinion gear 9 while penetrating through the pinion gear 9. A nut 17 is attached onto the front portion of the pinion gear 9. The rotor 3 is thus fixed to the pinion gear 9 by means of the nut 17. The pinion gear 9 is rotatably supported by the chassis 10 of the reel unit 2 through a bearing 18a and a bearing 18b. The bearing 18a supports an axially intermediate portion of the pinion gear 9, whereas the bearing 18b supports an axially rear portion of the pinion gear 9.

As illustrated in FIGS. 2 and 3, the oscillation mechanism 6 is a level winding mechanism of a traverse cam type and includes a deceleration mechanism 20, a traverse cam shaft 21, a slider 22 and two guide shafts 23a and 23b. The deceleration mechanism 20 meshes with the pinion gear 9 (see FIG. 2). The traverse cam shaft 21 is configured to rotate in conjunction with the deceleration mechanism 20. The slider 22 is configured to move back and forth while being engaged with the traverse cam shaft 21. The guide shafts 23a and 23b are configured to guide the slider 22 along the spool shaft 16. The traverse cam shaft 21 includes intersecting helical grooves 21 a on the outer peripheral surface thereof.

As illustrated in FIGS. 2 and 3, the slider 22 is a member that is coupled to the rear end of the spool shaft 16 in a non-rotatable state. The slider 22 includes an engagement member 22a and a slider body 22b. The engagement member 22a is engaged with the helical grooves 21a of the traverse cam shaft 21. The engagement member 22a is attached to the slider body 22b. The slider body 22b is configured to move back and forth in conjunction with rotation of the traverse cam shaft 21. The slider 22 is configured to reciprocate along the spool shaft 16 in conjunction with rotation of the traverse cam shaft 21 due to the aforementioned structure in which the tip of the engagement member 22a is engaged with the helical grooves 21a. The spool shaft 16 thereby reciprocates in conjunction with rotation of the handle 1.

As illustrated in FIG. 2, the rotor 3 includes a rotor body 35 and a bail arm 34. The rotor body 35 is rotatably attached to the reel unit 2 through the pinion gear 9. The bail arm 34 is pivotably attached to the rotor body 35. The rotor body 35 is made of, for instance, aluminum alloy. The rotor body 35 includes a support portion 30, a first rotor arm 31 and a second rotor arm 32. The support portion 30 is a tubular portion fixed to the pinion gear 9. The first and second rotor arms 31 and 32 respectively extend forwards from positions facing the outer peripheral surface of the rear end of the support portion 30, while respectively keeping a predetermined distance from the outer periphery of the support portion 30. The support portion 30, the first rotor arm 31 and the second rotor arm 32, together forming the rotor body 35, are all made of aluminum alloy or the like and are integrally molded by means of die cast molding. As illustrated in FIGS. 1 and 2, the radially outer periphery of the first rotor arm 31 is covered with a first cover member 36, whereas the radially outer periphery of the second rotor arm 32 is covered with a second cover member 37. Further, a first bail support member 40 is pivotably attached to the outer peripheral side of the tip of the first rotor arm 31, whereas a second bail support member 42 is pivotably attached to the outer peripheral side of the tip of the second rotor arm 32. The first and second bail support members 40 and 42 form the bail arm 34. The bail arm 34 is provided for smoothly guiding the fishing line from the fishing rod to the spool 4 and winding the fishing line onto the spool 4. The bail arm 34 is allowed to pivot between a fishing line guide position and a fishing line release position flipped from the fishing line guide position.

Rotation of the rotor 3 is allowed/prevented in a fishing line release direction by an anti-reverse mechanism 50 illustrated in FIG. 2. The anti-reverse mechanism 50 includes a roller type one-way clutch 51 attached to the chassis 10. The one-way clutch 51 is configured to switch between a reverse prevention state and a reverse permission state. The anti-reverse mechanism 50 further includes a switching operation portion 52 for switching the one-way clutch 51 between the reverse prevention state and the reverse permission state. The switching operation portion 52 is pivotably supported by the bottom of the chassis 10.

### Spool Structure

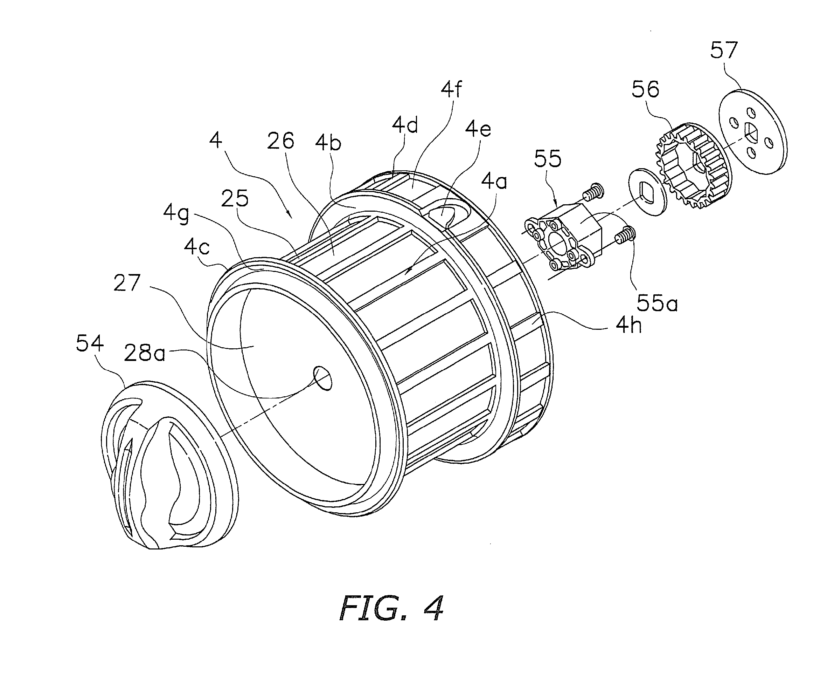

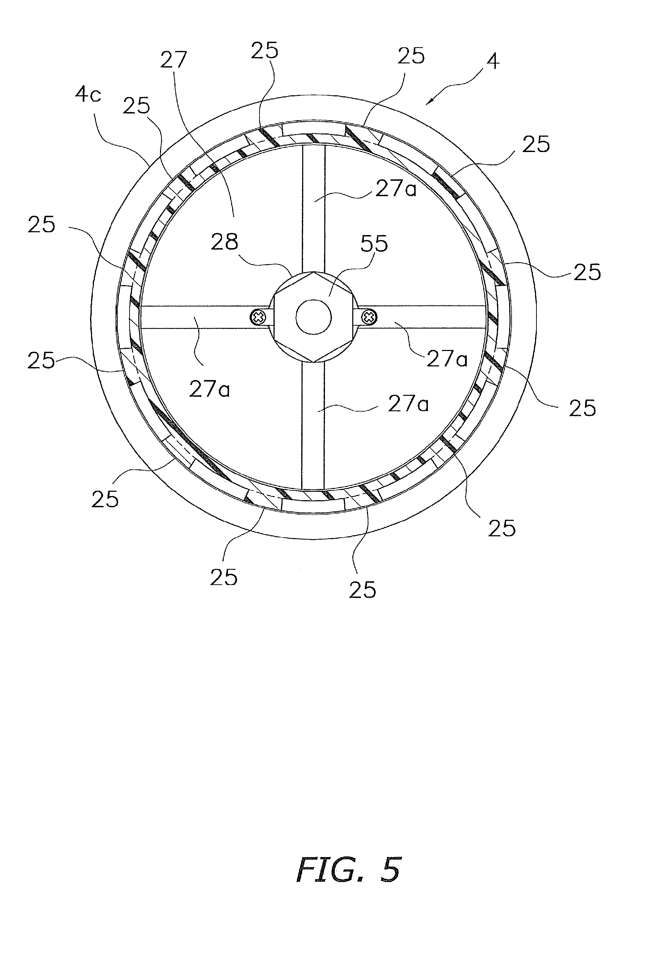

As illustrated in FIGS. 4 and 5, the spool 4 is a shallow groove spool. The spool 4 is detachably coupled to the distal end of the spool shaft 16 in a non-rotatable state. The spool shaft 16 includes an anti-rotation portion 16a and a male threaded portion 16b on the outer peripheral surface of the distal end of the spool shaft 16. The anti-rotation portion 16a includes a pair of parallel chamfered portions. The spool 4 is detachably fixed to the distal end of the spool shaft 16 by means of a spool knob 54 to be screwed onto the male threaded portion 16b. Further, the spool 4 is prevented from rotating about the spool shaft 16 by means of an anti-rotation member 55 fixed to the rear surface of the spool 4 by means of screws. The anti-rotation member 55 includes an outer peripheral surface 55a having a regular hexagonal cross-section. The outer peripheral surface 55a is engaged with the inner peripheral surface of a closed-end tubular sound producing member 56. The sound producing member 56 is attached onto the spool shaft 16 in a non-rotatable state. The sound producing member 56 makes contact with a circular spool receiver 57. The sound producing member 56 and the spool receiver 57 are engaged with the anti-rotation portion 16a and are thereby non-rotatably attached onto the spool shaft 16. The spool receiver 57 is prevented from moving axially rearwards by a step formed between the anti-rotation portion 16a and the outer peripheral surface of the spool shaft 16. In the first exemplary embodiment, the sound producing member 56 does not function as a sound producing mechanism due to the structure in which the spool 4 is prevented from rotating about the spool shaft 16.

The spool 4 includes a bobbin trunk 4a, a rear flange 4b, a front flange 4c and a skirt 4d. The bobbin trunk 4a is used for winding the fishing line around the outer periphery thereof. The rear flange 4b is formed on the rear end of the bobbin trunk 4a. The rear flange 4b has a diameter slightly greater than that of the bobbin trunk 4a. The front flange 4c is formed on the front end of the bobbin trunk 4a. The front flange 4c has a diameter slightly greater than that of the bobbin trunk 4a. The skirt 4d is a tubular portion integrally formed with the outer periphery of the rear flange 4b. For example, these portions 4a, 4b, 4c and 4d are respectively made of synthetic resin (e.g., short-glass-fiber reinforced polyamide resin) and are formed by means of injection molding.

The bobbin trunk 4a is disposed on the outer peripheral side of the support portion 30 of the rotor 3. The bobbin trunk 4a includes a plurality of coupling ribs 25 (example of a plurality of coupling portions) and a tubular coupling portion 26. The coupling ribs 25 are disposed at predetermined intervals along the circumferential direction of the bobbin trunk 4a. The tubular coupling portion 26 is disposed between the front flange 4c and the rear flange 4b for connecting the inner peripheries of the coupling ribs 25. Further, the bobbin trunk 4a includes a front wall 27 and a boss 28. The front wall 27 is a disc-shaped portion formed on the inner peripheral side of the front flange 4c. The boss 28, including a through hole 28a, is formed on the radial center portion of the front wall 27. The front wall 27 includes a plurality of (e.g., four) ribs 27a on the rear surface thereof for a reinforcement purpose. Specifically, the ribs 27a protrude from the rear surface of the front wall 27 while radially extend from the outer periphery of the boss 28. The outer peripheral surface of the spool shaft 16 is rotatably fitted with the through hole 28a of the boss 28. Further, the anti-rotation member 55 is fixed to the rear surface of the boss 28.

The coupling ribs 25 are each formed along the back-and-forth direction for coupling the front flange 4c and the rear flange 4b. The plural coupling ribs 25 are provided for limiting variation in thickness of the bobbin trunk 4a with respect to the thicknesses of the front and rear flanges 4c and 4b. The outer peripheral surfaces of the coupling ribs 25 are formed with circular-arc surfaces extending along the back-and-forth direction with the same radius about the spool shaft 16. For example, the number of the coupling ribs 25 is 16 in the first exemplary embodiment.

The inner peripheral surface of the tubular coupling portion 26 is tapered such that the tubular coupling portion 26 can be easily removed from a die in molding. Specifically, the inner peripheral surface of the tubular coupling portion 26 is tapered at an angle of roughly 0.5 to 2 degrees with respect to the spool shaft 16. The tubular coupling portion 26 has an inner diameter increasing from its front side to its back side.

The rear flange 4b has a diameter slightly greater than that of the front flange 4c. The rear flange 4b is an annular portion roughly perpendicular to the bobbin trunk 4a. The front flange 4c has a tapered surface slanted forward on the bobbin trunk 4a side. The front flange 4c includes a first recessed portion 4g annularly recessed on the front surface thereof for regulating the thickness of the front flange 4c. The first recessed portion 4g is continuously formed on the front surface of the front flange 4c along the circumferential direction in this embodiment. However, the first recessed portion 4g may be non-continuously formed at predetermined intervals on the front surface of the front flange 4c along the circumferential direction.

The skirt 4d is provided with a fishing line holder 4e for holding the fishing line. The fishing line holder 4e is disposed in a U-shaped recess. The skirt 4d includes a plurality of (e.g., 15) second recessed portions 4f on the outer peripheral surface thereof. The second recessed portions 4f are circumferentially disposed at predetermined intervals on the outer periphery of the skirt 4d, excluding a region in which the fishing line holder 4e is attached. The second recessed portions 4f are recessed in a rectangular shape, and serve to reduce the weight of the skirt 4d and regulate the thickness of the skirt 4d. Annularly aligned portions 4h are formed in the region of the skirt outer periphery including the second recessed portions 4f. Even when the fishing line enters the skirt 4d across the bobbin trunk 4a, the fishing line is tangled with the annularly aligned portions 4h and is prevented from moving rearwards therefrom. Simply put, the fishing line is prevented from easily moving rearwards across the spool 4 without being wound around the spool 4.

According to the spool 4 with the aforementioned structure, it is possible to regulate the thicknesses of the bobbin trunk 4a to vary less with respect to the thicknesses of the front and rear flanges 4b and 4c by means of the plural coupling ribs 25. Accordingly, production of sink marks on the outer periphery of the spool 4 is prevented.

### Second Exemplary Embodiment

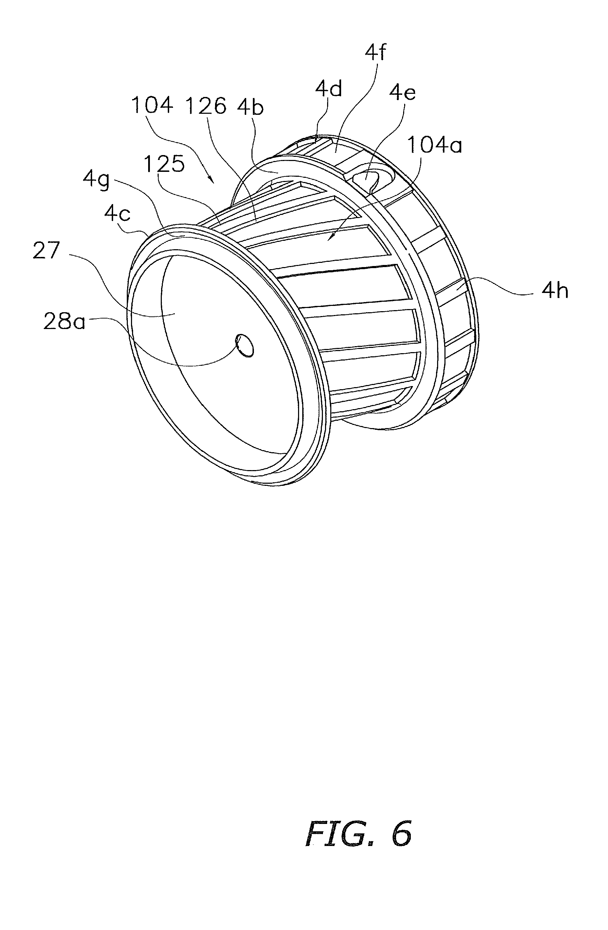

In the first exemplary embodiment, the coupling ribs 25 of the bobbin trunk 4a of the spool 4 are each disposed along the back-and-forth direction. In a second exemplary embodiment, by contrast, coupling ribs 125 of a bobbin trunk 104a of a spool 104 are obliquely formed while intersecting the back-and-forth direction as illustrated in FIG.6. Specifically, in each coupling rib 125, its coupled portion to the front flange 4c and its coupled portion to the rear flange 4d are circumferentially displaced about the spool shaft 16 at an angle of, for instance, 22.5 degrees. A tubular coupling portion 126 connects the inner peripheries of the coupling ribs 125. The other spool elements of the second exemplary embodiment are the same as those of the first exemplary embodiment. Therefore, explanation thereof will be omitted.

### Third Exemplary Embodiment

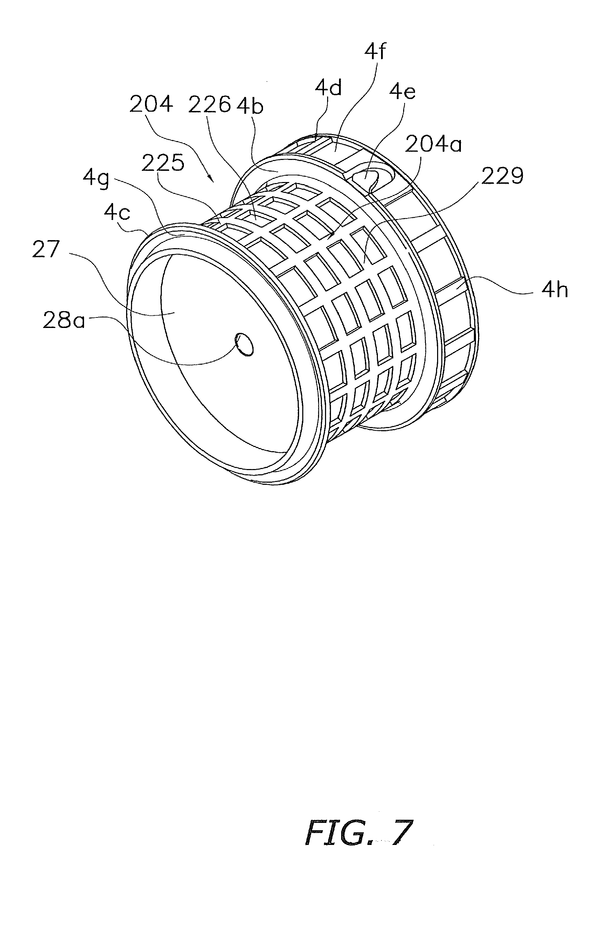

As illustrated in FIG. 7, a bobbin trunk 204a of a spool 204 of a third exemplary embodiment further includes a single or plurality of annular portions 229. The annular portion/portions 229 is/are disposed perpendicular to the spool shaft 16 for circumferentially connecting a plurality of coupling ribs 225. In the third exemplary embodiment, three annular portions 229 are disposed at predetermined intervals along the back-and-forth direction. A tubular coupling portion 226 connects the inner peripheries of the coupling ribs 225. The other spool elements of the third exemplary embodiment are the same as those of the first exemplary embodiment. Therefore, explanation thereof will be omitted.

### Fourth Exemplary Embodiment

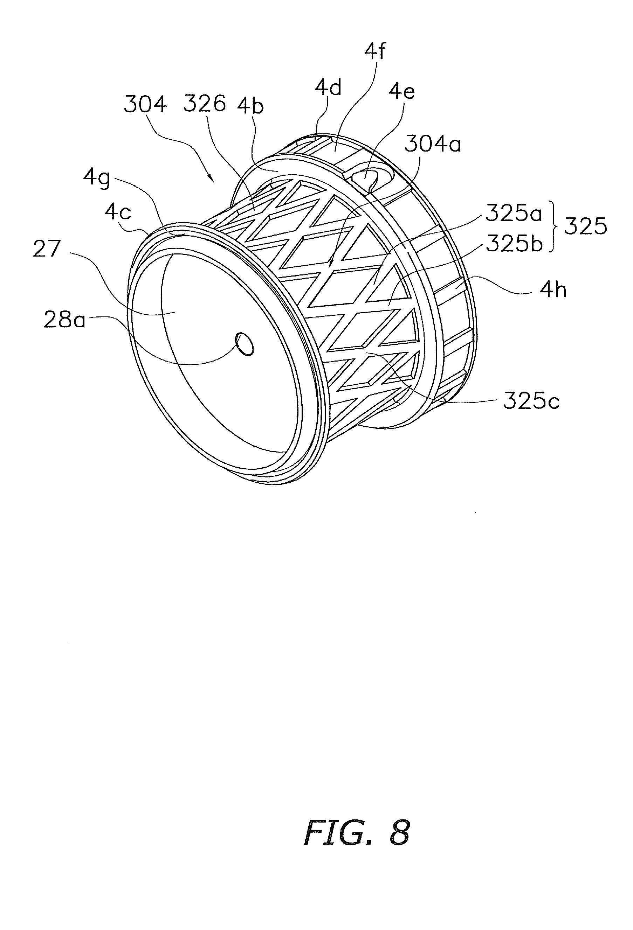

As illustrated in FIG. 8, a bobbin trunk 304a of a spool 304 of a fourth exemplary embodiment includes a plurality of coupling ribs 325 and a tubular coupling portion 326. The coupling ribs 325 are formed with a plurality of first coupling ribs 325a and a plurality of second coupling ribs 325b. The first coupling ribs 325a are obliquely disposed along a first direction that intersects the back-and-forth direction. The second coupling ribs 325b are obliquely disposed along a second direction that intersects the first direction. The first coupling ribs 325a and the second coupling ribs 325b are obliquely disposed in opposite directions. In other words, the first coupling ribs 325a and the second coupling ribs 325b intersect at axial positions between the front flange 4c and the rear flange 4d. The coupling ribs 325 are reinforced due to intersections 325c, and circumferential stiffness thereof is thereby enhanced. The tubular coupling portion 326 connects the inner peripheries of the coupling ribs 325. The other spool elements of the fourth exemplary embodiment are the same as those of the first exemplary embodiment. Therefore, explanation thereof will be omitted.

### Fifth Exemplary Embodiment, not part of the claimed invention

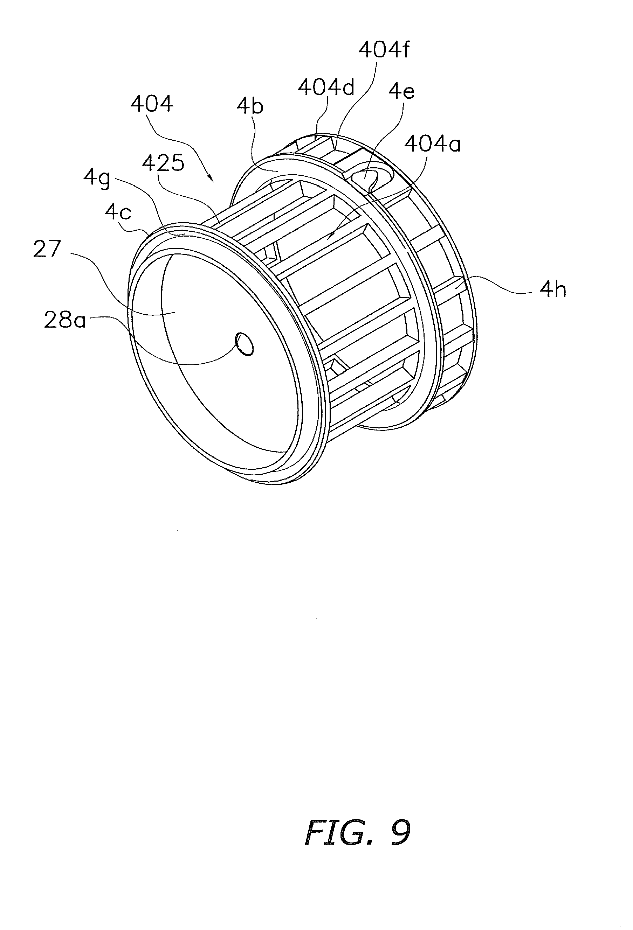

As illustrated in FIG. 9, a bobbin trunk 404a of a spool 404 of a fifth exemplary embodiment is similar to but different from the spool 4 of the first exemplary embodiment in that the bobbin trunk 404a does not include the tubular coupling portion 26 of the spool 4. Therefore, coupling ribs 425 extend radially inwards from the outer periphery of the bobbin trunk 404a to positions where the inner peripheral surface of the coupling tubular portion 26 is disposed in the first exemplary embodiment.

Further, recessed portions 404f are formed in a skirt 404d while penetrating the inner and outer peripheral surfaces of the skirt 404d. Weight reduction is further achieved in the spool 404 with the formation of the recessed portions 404f that penetrate the inner and outer peripheral surfaces of the skirt 404d. The other spool elements of the fifth exemplary embodiment are the same as those of the first exemplary embodiment. Therefore, explanation thereof will be omitted.

### Sixth Exemplary Embodiment, not part of the claimed invention

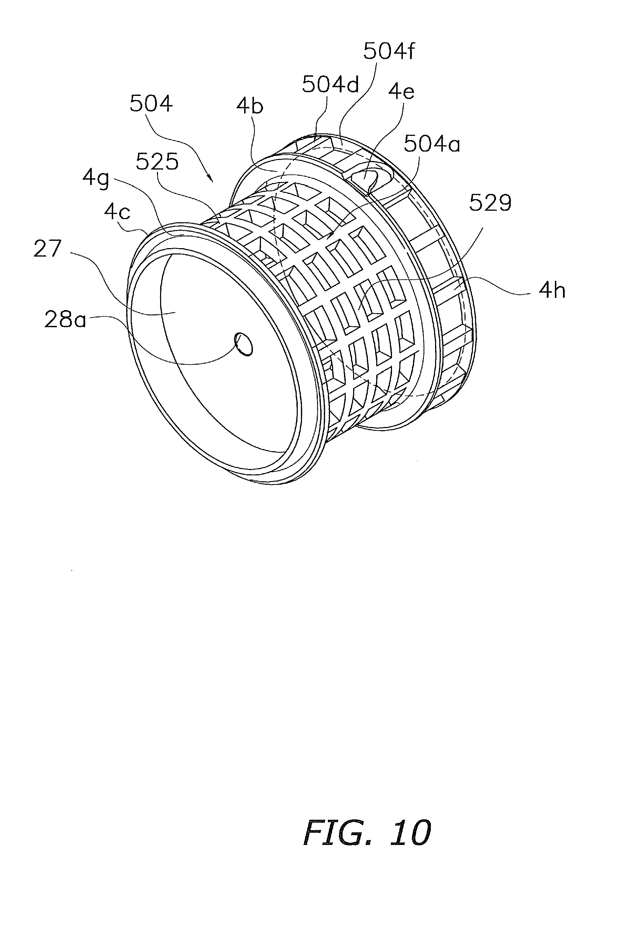

As illustrated in FIG. 10, a bobbin trunk 504a of a spool 504 of a sixth aspect of the present invention is similar to but different from the bobbin trunk 204a with the annular portions 229 of the third exemplary embodiment in that the bobbin trunk 504a does not include the tubular coupling portion 226 of the bobbin trunk 204a. Similarly to the fifth exemplary embodiment, coupling ribs 525 and annular portions 529 extend radially inwards from the outer periphery of the bobbin trunk 504a to positions where the inner peripheral surface of the tubular coupling portion 226 is disposed in the third exemplary embodiment. Further similarly to the fifth exemplary embodiment, recessed portions 504f penetrate the inner and outer peripheral surfaces of a skirt 504d. The other spool elements are the same as those of the first exemplary embodiment. Therefore, explanation thereof will be omitted.

### Seventh Exemplary Embodiment, not part of the claimed invention

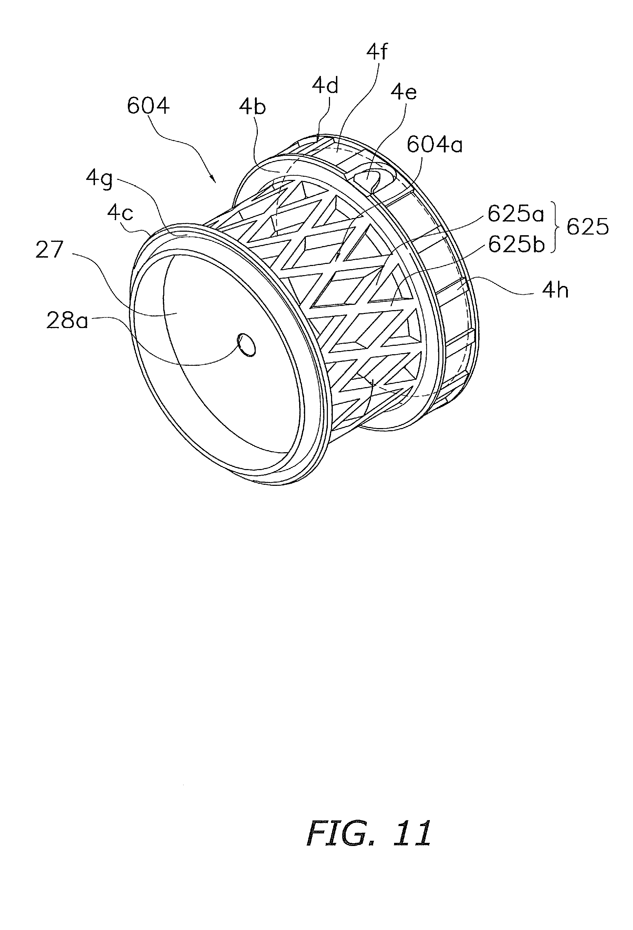

As illustrated in FIG. 11, a bobbin trunk 604a of a spool 604 of a seventh exemplary embodiment is similar to but different from the bobbin trunk 304a of the fourth exemplary embodiment including the coupling ribs 325 formed by the first coupling ribs 325a and the second coupling ribs 325b in that the bobbin trunk 604a does not include the tubular coupling portion 326 of the bobbin trunk 304a. Similarly to the fifth exemplary embodiment, coupling ribs 625, including first coupling ribs 625a and second coupling ribs 625b, extend radially inwards from the outer periphery of the bobbin trunk 604a to positions where the inner peripheral surface of the tubular coupling portion 326 is disposed in the fourth exemplary embodiment. The other spool elements of the seventh exemplary embodiment, including the recessed portions 4f, are the same as those of the first exemplary embodiment. Therefore, explanation thereof will be omitted.

### Eighth Exemplary Embodiment, not part of the claimed invention

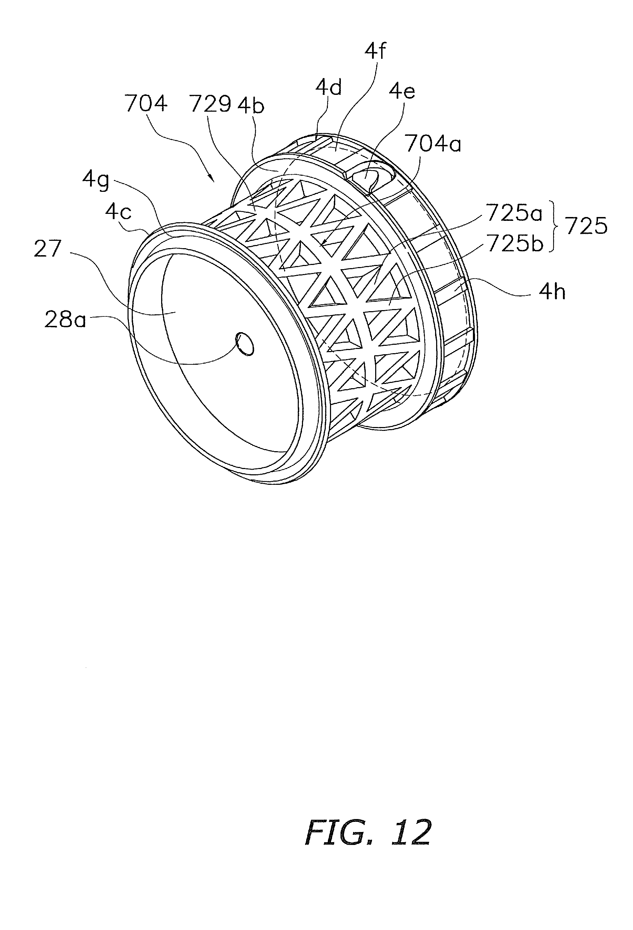

As illustrated in FIG. 12, a bobbin trunk 704a of a spool 704 of an eighth exemplary embodiment is similar to but different from the bobbin trunk 604a of the seventh exemplary embodiment including the coupling ribs 625 formed by the first coupling ribs 625a and the second coupling ribs 625b in that the bobbin trunk 704a includes an annular portion 729. Similarly to the seventh exemplary embodiment, the annular portion 729 and coupling ribs 725 formed by first coupling ribs 725a and second coupling ribs 725b extend radially inwards to the same positions as those of the coupling ribs 625. The other spool elements of the eighth exemplary embodiment, including the recessed portions4f, are the same as those of the first exemplary embodiment. Therefore, explanation thereof will be omitted.

### Features

(A) The spinning reel spool 4 (104, 204...704) is attached onto the spool shaft 16 mounted movably back and forth in the reel unit 2 for winding the fishing line thereon. The spool 4 (104, 204...704) includes the front flange 4c, the rear flange 4b and the bobbin trunk 4a (104a, 204a...704a). The rear flange 4b is disposed rearwards of the front flange 4c. The bobbin trunk 4a (104a, 204a...704a) includes a plurality of the coupling ribs 25 (125, 225...725) circumferentially disposed at predetermined intervals for coupling the front and rear flanges 4b and 4c. The bobbin trunk 4a is integrally formed with the front and rear flanges 4b and 4c. The diameter of the bobbin trunk 4a is less than the diameters of the front and rear flanges 4b and 4b.

According to the spool of the exemplary embodiments, the bobbin trunk 4a (104a, 204a...704a) includes the plural coupling ribs 25 (125, 225...725). The coupling ribs 25 (125, 225...725) couples the front flange 4c and the rear flange 4b. It is possible to regulate the thicknesses of the bobbin trunk 4a (104a, 204a...704a) to vary less with respect to the thicknesses of the front and rear flanges 4b and 4c by means of the plural coupling ribs 25 (125, 225...725). It is thus possible to regulate variation in thickness between the bobbin trunk 4a (104a, 204a...704a) and the front and rear flanges 4c and 4b through the bobbin trunk 4a (104a, 204a...704a) partially or entirely formed with the plural coupling ribs 25 (125, 225...725) circumferentially disposed at predetermined intervals. Therefore, production of sink marks on the outer surface of the spool 4 (104, 204...704) is limited.

(B) In the spool 4 (104, 204, 304), according to the invention, the bobbin trunk 4a (104a, 204a, 304a) further includes the tubular coupling portion 26 (126, 226, 326) that connects the inner peripheries of the plural coupling ribs 25 (125, 225, 325). In this case, circumferential stiffness of the bobbin trunk 4a (104a, 204a, 304a) is enhanced due to the structure in which the inner peripheries of the coupling ribs 25 (125, 225, 325) are connected by the tubular coupling portion 26 (126, 226, 326).

(C) In the spool 4 (204, 404, 504), the plural coupling ribs 25 (225, 425 and 525) are each disposed along the back-and-forth direction. In this case, the coupling ribs 25 (225, 425, 525) have a simple structure. Accordingly, the spool 4 (204, 404, 504), including the coupling ribs 25 (225, 425, 525), can be easily manufactured by injection molding.

(D) In the spool 104 (304, 604, 704), the plural coupling ribs 125 (325, 625, 725) are obliquely disposed while intersecting the back-and-forth direction. In this case, circumferential stiffness of the bobbin trunk 104a (304a, 604a, 704a) is further enhanced due to the obliquely disposed coupling ribs 125 (325, 625, 725).

(E) In the spool 304, the plural coupling ribs 32 5 are formed with the first coupling ribs 325a and the second coupling ribs 325b. The first coupling ribs 325a are obliquely disposed along the first direction that intersects the back-and-forth direction, whereas the second coupling ribs 325b are obliquely disposed along the second direction that intersects the first direction. In this case, the coupling ribs 32 5 are formed with the first coupling ribs 325a and the second coupling ribs 325b, which obliquely intersect with each other along the first and second directions. Therefore, plural intersections are formed between the first coupling ribs 325a and the second coupling ribs 325b in both the circumferential direction and the back-and-forth direction. Consequently, circumferential stiffness is further enhanced in the bobbin trunk 304a.

(F) In the spool 204 (504, 704), the bobbin trunk 204a (504a, 704a) further includes a single or plurality of the annular portions 229 (529, 729) disposed perpendicular to the spool shaft 16 for circumferentially connecting the coupling ribs 225 (525, 625). In this case, circumferential stiffness is further enhanced in the bobbin trunk 204a (504a, 704a) due to the structure in which the coupling ribs 225 (525, 625), circumferentially disposed at predetermined intervals, are circumferentially connected by the annular portion 229 (529, 729).

(G) The spool 4 (104, 204...704) further includes the tubular skirt 4d (404d) integrally formed with the outer periphery of the rear flange 4b. In this case, stiffness of the spool 4 (104, 204...704) can be enhanced as a whole by the tubular skirt 4d (404d).

### OTHER EXEMPLARY EMBODIMENTS

Exemplary embodiments of the present invention have been explained above. However, the present invention is not limited to the aforementioned exemplary embodiments and a variety of changes can be made for the embodiments without departing from the scope of the present invention, as defined by the appended claims.

(a) In the aforementioned exemplary embodiments, the coupling ribs are each linearly formed along the back-and-forth direction or the directions intersecting the back-and-forth direction. However, the directions and shapes of the coupling ribs may not be particularly limited as long as the coupling ribs couple the front flange and the rear flange. For example, the front flange and the rear flange may be coupled by either a plurality of linearly bending lines or a plurality of winding curves (e.g., spiral curves).

(b) The aforementioned embodiments have exemplified the shallow groove spool for the surf casting spinning reel without a drag mechanism. However, the present invention may be applied to spools for all types of spinning reels including spools embedded with a drag mechanism.

(c) In the aforementioned exemplary embodiments, the spool surface is not particularly processed. However, a hard coating may be formed on fishing-line contactable portions (i.e., the bobbin trunk, the front flange, the rear flange of the spool and the like) by means of hard plating, ion plating or the like.

(d) The present invention has been explained in the aforementioned exemplary embodiments using the exemplary spool in which the support portion of the rotor is contained in the inner peripheral side of the bobbin trunk. However, the present invention may be applied to a type of spool in which the support portion of the rotor is contained in the inner peripheral side of the skirt.

## Claims

1. A spinning reel spool (4, 104, 204, 304) attached onto a spool shaft (16) mounted movably back and forth in a reel unit for winding a fishing line thereon, comprising:
a front flange (4c) ;
a rear flange (4b) disposed rearwards of the front flange; and a bobbin trunk (4a) integrally formed with the front flange and the rear flange, the bobbin trunk (4a) having a diameter less than diameters of the front and rear flanges, the bobbin trunk (4a) including a plurality of coupling portions (25) for coupling the front flange and the rear flange, the coupling portions being disposed at predetermined intervals in a circumferential direction of the bobbin trunk, **characterized in that** the bobbin trunk (4) further includes a tubular coupling portion (26) between the front flange and the rear flange for connecting inner peripheries of the coupling portions, the tubular coupling portion having an inner diameter increasing from its front end, the inner peripheral surface of the tubular coupling portion being tapered at an angle of roughly 0,5 to 2 degrees with respect to the spool shaft.

2. The spinning reel spool according to claim 1 , wherein the coupling portions (25, 225) are each disposed along a back-and-forth direction.

3. The spinning reel spool according to claim 1, wherein the coupling portions (125, 325) are obliquely disposed to intersect a back-and-forth direction.

4. The spinning reel spool according to claim 3, wherein the coupling portions (325) include a plurality of first coupling portions (325a) and a plurality of second coupling portions (325b), the first coupling portions obliquely disposed along a first direction intersecting the back-and-forth direction, the second coupling portions obliquely disposed along a second direction intersecting the first direction.

5. The spinning reel spool according to one of claims 1 to 4, wherein the bobbin trunk further includes at least an annular portion disposed perpendicular to the spool shaft for connecting the coupling portions in the circumferential direction of the bobbin trunk.

6. The spinning reel spool according to one of claims 1 to 5, further comprising:
a tubular skirt integrally formed with an outer peripheral portion of the rear flange.

## Patentansprüche

1. Spinnrollenspule (4, 104, 204, 304), befestigt an einer Spulenwelle (16), vor und zurück beweglich montiert in einer Rolleneinheit zum Aufwickeln einer Angelschnur daran, umfassend:
einen vorderen Flansch (4c);
einen hinteren Flansch (4d), angeordnet rückwärtig von dem vorderen Flansch;
und einen Wickelkörper (4a), integral ausgebildet mit dem vorderen Flansch und dem hinteren Flansch, wobei der Wickelkörper (4a) einen Durchmesser aufweist, der geringer ist als der Durchmesser der vorderen und hinteren Flansche, wobei der Wickelkörper (4a) eine Vielzahl von Kopplungsabschnitte (25) enthält zum Koppeln mit dem vorderen Flansch und dem hinteren Flansch, wobei die Kopplungsabschnitte angeordnet sind bei vorbestimmten Intervallen in einer umfänglichen Richtung des Wickelkörpers, **dadurch gekennzeichnet, dass** der Wickelkörper (4a) weiterhin einen tubusartigen Kopplungsabschnitt (26) zwischen dem vorderen Flansch und dem hinteren Flansch enthält zum Verbinden innerer Peripherien der Kopplungsabschnitte, wobei der tubusartige oder rohrförmige Kopplungsabschnitt einen Innendurchmesser aufweist, der von seinem vorderen Ende zunimmt, wobei die innere periphere Fläche des rohrförmigen Kopplungsabschnittes zulaufend ist bei einem Winkel von etwa 0,5 bis 2 Grad mit Bezug auf die Spulenwelle.

2. Spinnrollenspule nach Anspruch 1, bei welcher die Kopplungsabschnitte (25, 225) jeweils angeordnet sind entlang einer Vor- und Zurückrichtung.

3. Spinnrollenspule nach Anspruch 1, bei welcher die Kopplungsabschnitte (125, 325) schräg angeordnet sind zum Schneiden einer Vor- und Zurückrichtung.

4. Spinnrollenspule nach Anspruch 3, bei welcher die Kopplungsabschnitte (325) eine Vielzahl von ersten Kopplungsabschnitten (325a) und eine Vielzahl von zweiten Kopplungsabschnitten (325b) enthalten, wobei die ersten Kopplungsabschnitte schräg angeordnet sind entlang einer ersten Richtung, die Vor- und Zurückrichtung schneidend, wobei die zweiten Kopplungsabschnitte schräg angeordnet sind entlang einer zweiten Richtung, die erste Richtung schneidend.

5. Spinnrollenspule nach einem der Ansprüche 1 bis 4, bei welcher der Wickelkörper des Weiteren zumindest einen ringförmigen Abschnitt enthält, angeordnet senkrecht zu der Spulenwelle zur Verbindung der Kopplungsabschnitte in der umfänglichen Richtung des Wickelkörpers.

6. Spinnrollenspule nach einem der Ansprüche 1 bis 5, des Weiteren umfassend:
eine röhrenartige oder tubusförmige Schürze, integral ausgebildet mit einem äußeren peripheren Abschnitt des hinteren Flansches.

## Revendications

1. Tambour de moulinet de pêche à lancer (4, 104, 204, 304) attaché sur un arbre de tambour (16) et monté mobile pour se déplacer dans un mouvement de va-et-vient dans une unité de moulinet pour l'enroulement d'une ligne de pêche sur celui-ci, comprenant :
un rebord avant (4c) ;
un rebord arrière (4b) disposé à l'arrière du rebord avant ; et un tronc de bobine (4a) formé intégralement avec le rebord avant et le rebord arrière, le tronc de bobine (4a) ayant un diamètre inférieur aux diamètres des rebords ou flasques avant et arrière, le tronc de bobine (4a) comprenant une pluralité de parties de couplage (25) pour coupler le rebord avant et le rebord arrière, des parties de couplage étant disposées à des intervalles prédéterminés dans une direction circonférentielle du tronc de bobine, **caractérisé en ce que** le tronc de bobine (4) comprend en outre une partie de couplage tubulaire (26) entre le rebord avant et le rebord arrière pour connecter des périphéries internes des parties de couplage, la partie de couplage tubulaire ayant un diamètre interne allant en augmentant en partant de son extrémité avant, la surface périphérique interne de la partie de couplage tubulaire étant incliné ou biseautée à un angle d'environ 05 à 2 degrés par rapport à l'arbre de tambour.

2. Tambour de moulinet de pêche à lancer selon la revendication 1, dans lequel les parties de couplage (25, 225) sont disposées chacune dans une direction avant - arrière ou de va et vient.

3. Tambour de moulinet de pêche à lancer selon la revendication 1, dans lequel les parties de couplage (125, 325) sont disposées à l'oblique pour croiser une direction avant - arrière ou de va et vient.

4. Tambour de moulinet de pêche à lancer selon la revendication 3, dans lequel les parties de couplage (325) comprennent une pluralité de premières parties de couplage (325a) et une pluralité de deuxièmes parties de couplage (325b), les premières parties de couplage étant disposées à l'oblique le long d'une première direction croisant la direction avant - arrière ou de va et vient, les deuxièmes parties de couplage étant disposées à l'oblique le long d'une deuxième direction croisant la première direction.

5. Tambour de moulinet de pêche à lancer selon l'une quelconque des revendications 1 à 4, dans lequel le tronc de bobine comprend en outre au moins une partie annulaire disposée perpendiculairement à l'arbre de tambour pour connecter les parties de couplage dans la direction circonférentielle du tronc de bobine.

6. Tambour de moulinet de pêche à lancer selon l'une quelconque des revendications 1 à 5, comprenant en outre une jupe tubulaire formée intégralement avec la partie périphérique externe du rebord arrière.
